# EUROPEAN PATENT SPECIFICATION

(11) **EP 2 542 484 B1**
(45) Date of publication and mention of the grant of the patent: **18.09.2024**
(21) Application number: 11750987.7
(22) Date of filing: 02.02.2011
(51) Int. Cl.: B65F 5/00, B65G 53/04, B65G 53/66

(54) **WASTE EMPTYING CONTROL**
ABFALLENTLEERUNGSSTEUERUNG
COMMANDE D'ÉVACUATION DES DÉCHETS

(30) Priority: 04.03.2010 SE 1000203
(43) Date of publication of application: 09.01.2013
(73) Proprietor: Envac AB, 112 26 Stockholm (SE)
(72) Inventor: ALFROST, Martin, S-414 57 Göteborg (SE); JANSSON, Markus, S-431 42 Mölndal (SE)
(74) Representative: AWA Sweden AB
(86) International application number: PCT/SE2011/050110
(87) International publication number: WO 2011/108971

(56) References cited:
- EP-A1- 2 022 731
- WO-A1-01/05683
- WO-A1-01/05683
- WO-A1-01/05684
- WO-A1-2004/094270
- WO-A1-2006/135296
- WO-A1-98/47788
- US-A- 4 094 551
- US-A- 5 954 078

## Description

### TECHNICAL FIELD

The present invention generally concerns systems for a pneumatic transport of material from a material deposit point and to a material collection point and more specifically relates to a method of controlling the emptying cycle for a temporary storage space in association with a deposit point of the kind stated in the preamble of claim 1 and to an emptying cycle control assembly for a temporary storage space of a pneumatic material collection and transport system of the kind stated in the preamble of claim 8.

### BACKGROUND

Pneumatic systems, predominantly systems of the vacuum operated type, are presently used for collecting and transporting various types of material, such as general household waste, kitchen waste, laundry and other waste fractions. In contemporary material collection systems of this kind having a space for the temporary storage of deposited material and having discharge valves controlling emptying of the space, discharge valve operation is generally controlled by using fixed predefined times to control valve open states. During continuous system operation the initially defined and set discharge valve open times will sometimes become less optimal and therefore must be tuned for maintaining efficient emptying and thereby optimized system operation.

In fact, it has been seen that the present day use of predefined discharge valve open times will always require some type of manual analysis and intervention and will never completely suit the system to which it has been applied. This is partly due to occurring disturbances and variations in the system operating characteristics. Variations vary with time of day, material types, season etc and too low set times may cause undesirable disturbance since required valve repetitions and blockages when closing the valve are time consuming. Likewise, too high set times will cause long operation hours and increased energy consumption.

In document WO2006/135296 A1 is described a method of operating a waste tank that is integrated in a pneumatic waste collection system. The tank has a storage space that is emptied by vacuum through a controlled discharge valve operation. The method is based on the described common use of fixed and predefined times. Specifically, it involves using preset time intervals for the vacuum application with the discharge valve open to initiate emptying. To eliminate/minimize blocking of the waste discharge from the tank the method also involves a detection of the level of vacuum applied to the tank, a detection of the air flow through the tank as well as the use of an agitating and conveying means in the tank. This document discloses the features of the preambles of claims 1 and 8.

### SUMMARY

It is a general object of the present invention to provide improved emptying sequence control in a pneumatic material collection and transport system.

In particular it is an object of the invention to suggest an improved method of controlling the emptying sequence of such a system to thereby improve the emptying efficiency, reduce operation time and lower the energy consumption of the system.

In particular it is another object of the invention to suggest an improved control assembly for such a system to thereby improve the system emptying sequence efficiency and lower costs.

These and other objects are met by the invention as defined by the accompanying patent claims.

The invention relates to pneumatic systems that are used for collecting and transporting deposited material. Specifically, it relates to such systems that use air flow to transport material from storage spaces at material deposit points and where emptying of the storage spaces is performed by opening a discharge valve downstream of the storage space. To achieve optimized storage space material discharge cycles, a basic idea of the invention is to detect a storage space emptying state when the discharge valve is open, to monitor, log and evaluate output from at least one emptying state sensor, to control discharge valve open times based on the sensor output and to close the discharge valve when the sensor output has indicated an empty condition of the storage space. This enables optimization of the emptying cycle for each storage space and thereby of the emptying sequence of the entire system.

In accordance with another aspect of the invention an improved emptying cycle control assembly is suggested for temporary storage spaces of pneumatic material collection and transport systems wherein air flow transports deposited material from the storage spaces through downstream discharge valves. The assembly includes a control system with emptying logic and valve actuator control means for controlling discharge valve opening and closing. A basic idea of the invention is that the assembly further comprises at least one sensor for detecting a storage space emptying state during discharge valve open condition, means for evaluating the emptying state sensor output and means for computing a controlled valve open time based on monitored and evaluated emptying state sensor output to effect closing of the discharge valve when monitored and evaluated emptying state sensor output has indicated a storage space empty condition. The inventive control assembly provides excellent conditions for performing effective material discharge cycles for each storage space and thereby an effective emptying sequence for an entire pneumatic material collection and transport system.

Preferred further developments of the basic inventive idea as well as embodiments thereof are specified in the dependent subclaims.

Advantages offered by the present invention, in addition to those described above, will be readily appreciated when reading the detailed description of embodiments of the invention.

### BRIEF DESCRIPTION OF THE DRAWINGS

The invention and further objects and advantages thereof will be best understood by reference to the following description taken together with the accompanying drawings, in which:
- Fig. 1: is a schematical illustration of a pneumatic waste collection system of a stationary type and including waste deposit point variants where the invention may be applied;
- Fig. 2: is a partial and schematical view of a first embodiment of a practical application of the invention at a waste deposit point variant of the system in Fig. 1;
- Fig. 3: is a similar view of a second embodiment of a practical application of the invention at another waste deposit point variant of the system in Fig. 1;
- Fig. 4: is a similar view of a third embodiment of a practical application of the invention at further waste deposit point variants of the system in Fig. 1;
- Fig. 5: is a schematical diagram of an emptying cycle control assembly of the invention;
- Fig. 6: is a schematic flow diagram of an embodiment of an emptying cycle control method according to the invention;
- Fig. 7: is a very schematical illustration of a mobile waste collection system where the invention may likewise be applied; and
- Fig. 8: is a partial and schematical view of another practical application of the invention at yet another waste deposit point variant of a pneumatic waste collection system.

### DETAILED DESCRIPTION

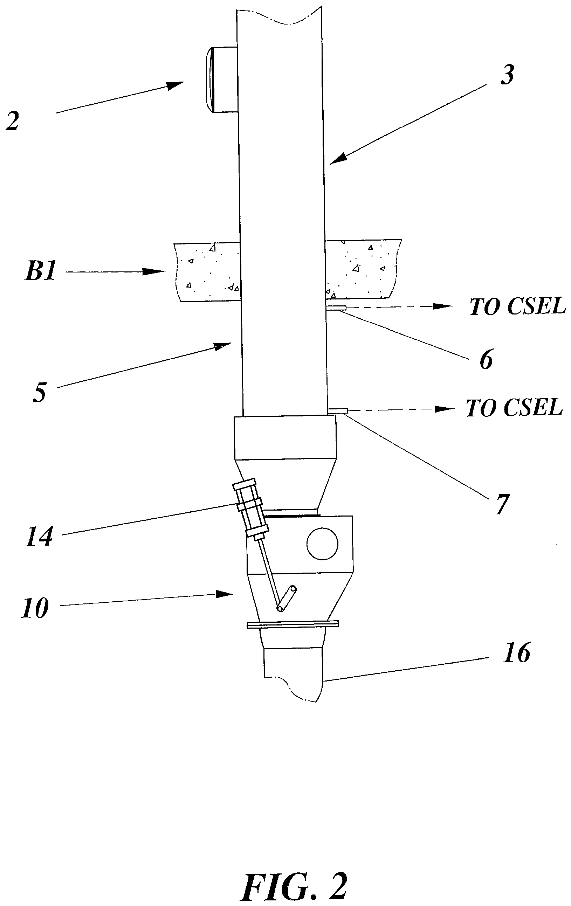

The invention will be explained with reference to exemplifying embodiments of the emptying cycle control of the invention that are illustrated in the accompanying drawing figures 2-9. These drawings refer to the use of the invention in conventional vacuum waste collection systems. It shall be emphasized, though, that the illustrations are for the purpose of describing preferred embodiments of the invention and are not intended to limit the invention to details thereof. The invention may with only minor adaption be applied to most types of pneumatic collection and transport systems, such as systems intended for collecting general household waste, kitchen waste and different waste fiactions, as well as to pneumatic systems for collecting and transporting e.g. laundry and other material. It is also emphasized that the use throughout the specification and claims of the terms "waste deposit point", "temporary storage space" and "discharge valve" shall not limit the invention to any specific type of system or system configuration. Therefore, the term "waste deposit point" shall include any type of material infeed means, manual or automatic, the term "temporary storage space" shall include any type of intermediate storage means in a material collection/transport system, irrespective of size or shape, and the term "discharge valve" shall include any type of means for opening and closing storage space outlet communication with a systems transport pipe.

Referring to the discussion in the introductory part of the specification, present day vacuum operated waste handling normally involves that waste deposited in the system is temporarily stored in a storage space situated fairly close to the deposit point. Great efforts have been made and are continuously being made within this field with the aim of optimizing the system emptying sequences. As a result of such efforts it has been known to monitor the fill levels of temporary storage spaces through various types of sensors and to determine the order of emptying the individual storage spaces or groups thereof based on one or several parameters. Such parameters may vary from being only the fill level of the storage spaces to being a complex combination of system layout, system specifications, and system capacity or occupation. Efforts have also been made to facilitate and speed up the actual emptying cycle of the storage spaces. This means that the present pneumatic waste handling is comparatively advanced when it comes to the emptying sequences of the different related branches and deposit points of the entire systems as well as to the secure emptying of the individual storage spaces. However, it has now been realized that present system operation does not adequately consider the dead time existing in each storage space emptying cycle. This dead time is the time that the storage space discharge valve remains open after the space has been sufficiently emptied and occurs since the emptying cycle of each storage space is conventionally based on a calculated and fixed emptying time that is not automatically or continuously updated with regard to changing system conditions. The use of such predetermined emptying times therefore tends to unnecessarily slow down the system emptying sequences.

To overcome the above described disadvantages and problems with the operation of known systems, the present invention now suggests a novel approach for optimizing the overall system operation by monitoring and controlling the emptying cycle for the individual storage spaces. According to the invention the actual emptying state of each individual storage space is considered in determining the actual open time of the associated discharge valve. This will enable time efficient operation of each discharge valve so that the next storage space emptying cycle in the system emptying sequence may in turn be started as soon as the preceding storage space has been effectively emptied and not after a predetermined time. This improvement will therefore clearly contribute not only to a time efficient system emptying sequence but will also lower the costs both for vacuum source operation, by shortening the total active time, and for system management since the discharge valve open times will no longer have to be regularly tuned. In this connection it should also be clarified that the term emptying state, as used herein, generally relates to the actual amount of collected material that remains in the storage space during the emptying cycle.

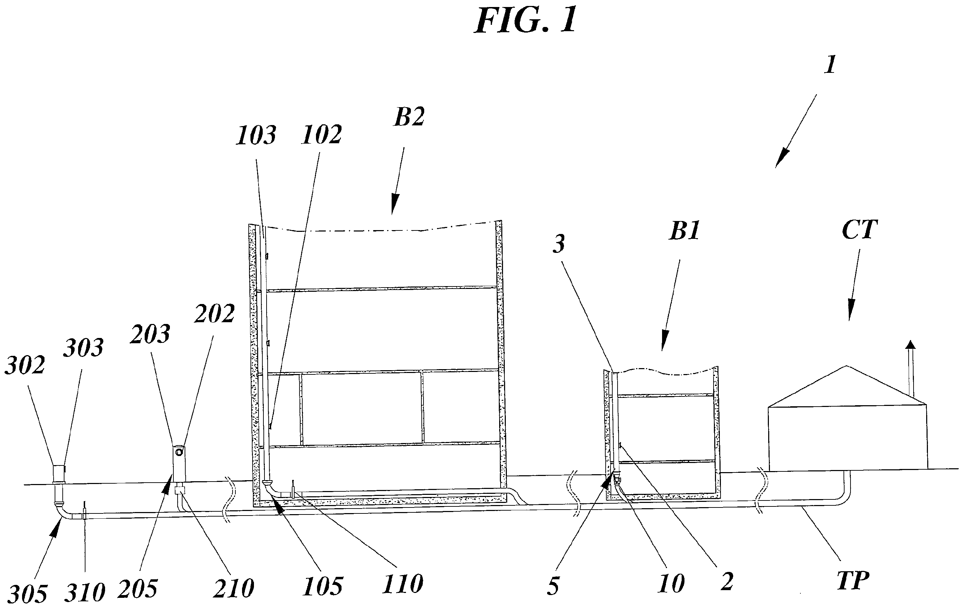

As was mentioned above, Fig. 1 schematically illustrates one example of a conventional vacuum waste collection system 1, namely of the stationary type where waste deposited at waste deposit points is transported in a waste transport pipe system TP and to a closed tank or container (not specifically illustrated) at a central waste collection terminal CT. In this system 1 a number of deposit point variants 2, 3; 102, 103; 202, 203; 302, 303 have been shown for the purpose of exemplifying that the invention may be applied to most stationary system variants. The deposit points may thus be of almost any conventional type, including insertion chutes 3, 103 extending through multistory buildings B1, B2 and normally having waste inlet openings 2; 102 on each story, or the free-standing or separate so called "litter bin" types of inserts 203, 303 that are normally installed outdoors and likewise have at least one waste inlet opening 202; 302 positioned at a convenient height for inserting waste therein standing on the ground. The deposit points 3; 103; 203; 303 are each associated with a storage space 5; 105; 205; 305 communicating with the transport pipe system TP through a controlled discharge valve 10; 110; 210; 310 provided downstream of the storage space.

The storage spaces 5; 105; 205; 305 serve the purpose of temporarily storing deposited waste until the next emptying cycle. The storage spaces take various forms and may be formed either by a lower part 5 of the actual multistory chute 3, or an expanded lower portion thereof, a curved lower section of a multistory chute 105, a curved lower pipe portion 305 of a "litter bin" type insert 303, for connection to the transport pipe TP, or by a space 205 formed in an actual "litter bin" type of insert 203.

Figs. 2-4 illustrate in greater detail first to forth embodiments of the application of the inventive solution to waste deposit points 2, 3; 102, 103; 202, 203; 302, 303 of the system 1 of Fig. 1. Specifically, Fig. 2 relates to the multistory waste chute 3 in the building B1 and to the inventive suggestion of providing at least one sensor 6, 7 for detecting waste remaining in the storage space. In this case two, first and second, or upper and lower, sensors 6, 7 are provided at spaced positions by the lower section of the chute 3 that forms the temporary storage space 5. Downstream of such a storage space 5 is provided a discharge valve 10 with its actuator 14. Emptying of the storage space 5 is thus controlled by the discharge valve 10 that in its open condition communicates emptied waste to the transport pipe TP through a connecting pipe 16.

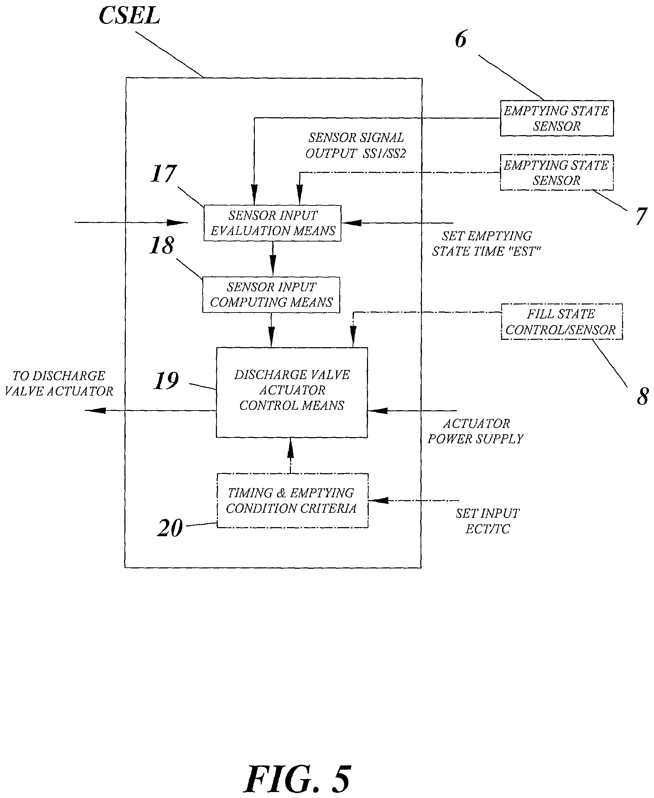

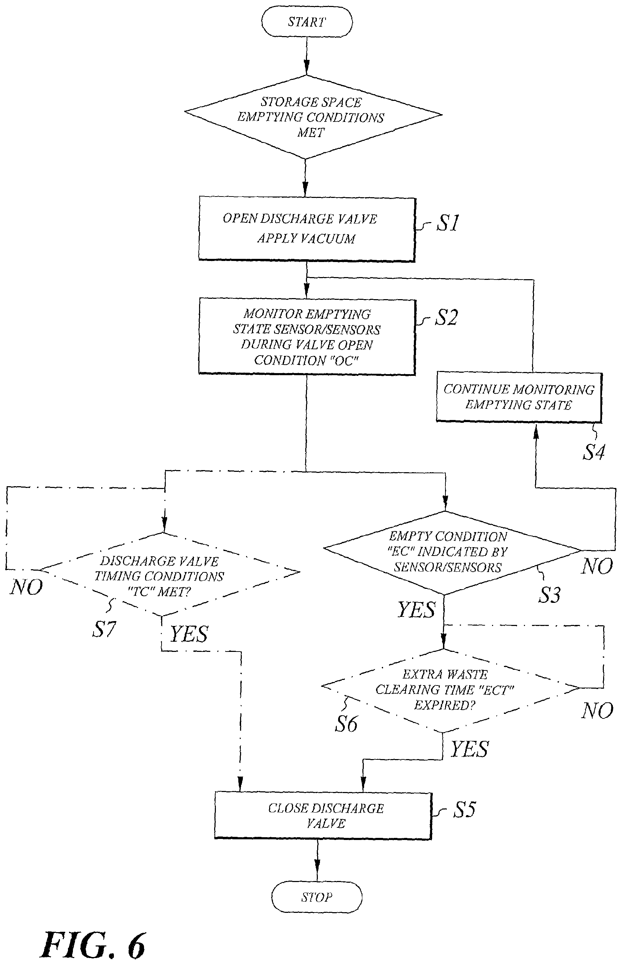

The emptying state sensors 6, 7 are provided for detecting the actual emptying state of each storage space 5 during discharge valve 10 open conditions OC (Fig. 6). Although the sensors 6, 7 of the invention may be very similar in design to the above described fill state sensors used in the prior art, they are used in a completely unique manner. According to the invention they are not used to determine when emptying shall be initiated, as in the prior art, but quite to the contrary to detect when an associated storage space has been adequately emptied, so that the discharge valve may be closed again and the emptying cycle for the next storage space in the system emptying sequence may be initiated as early as possible. As was mentioned above, two sensors 6, 7 are illustrated for this Fig. 2 embodiment, but it shall be emphasized that the invention is not restricted to the use of any specific number of sensors. The actual number of sensors may vary depending upon several conditions, such as type of sensor, type of chute, material fraction etc. Under favourable conditions only one sensor of an appropriate type may be required and in extreme situations even more than two sensors may be used. The actual type of sensor used may likewise depend on e.g. the prevailing conditions and may include digital and/or analogue level sensors, mechanical and/or ultrasonic and/or infrared type sensors. It is indicated in Fig. 2 that the output from the sensors 6, 7 is communicated to a control system emptying logic CSEL that will be described more closely below in connection with Fig. 5 and that controls the operation of the actuator 14 for the discharge valve 10.

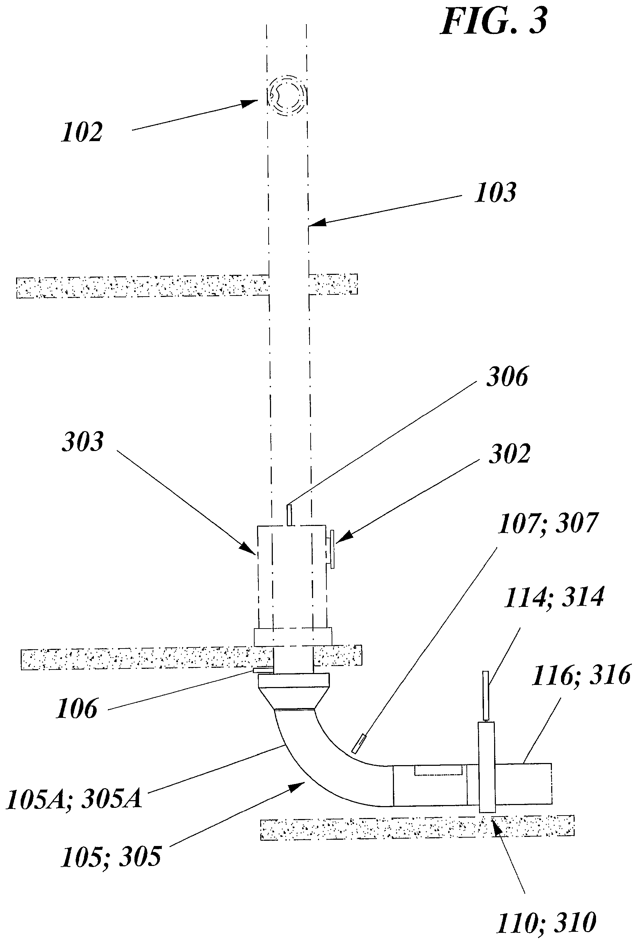

Fig. 3 relates to the two deposit point types of Fig. 1 that are in the form of the multistory waste chute 103 and associated inlet openings 102 in the building B2, and in the form of the "litter bin" type of insert 303 and associated inlet opening 302, respectively. Common to said deposit point variants is that in each case the storage space 105; 305 is formed in a chute/pipe bend 105A; 305A that is connected at one end to the lower end of the chute 103 and insert 303, respectively and that at the opposite end is connected to a connecting pipe 116; 316 that communicates emptied waste to the transport pipe TP. The discharge valve 110; 310 with its actuator 114; 314 is likewise provided downstream of the storage space 105; 305 and specifically in a generally horizontal part of the connecting pipe 116; 316. The illustrated first and second, or upper and lower, sensors 106; 306 and 107; 307, respectively, are here provided at spaced locations by the chute/pipe bend 105A; 305A that forms the temporary storage space 105; 305. Specifically, in the illustrated embodiment a first sensor 106; 306 is positioned either directly at a level with the lower end of the chute 103 or at an upper portion of the insert 303 and a second sensor 107; 307 is in both cases positioned slightly past the longitudinal midpoint of the bend 105A; 305A. However, these positions are only exemplifying and the actual positions may vary depending on e.g. the above mentioned conditions determining also the number of sensors used. All of the other considerations regarding the sensors that were mentioned above in relation to Fig. 2 are valid also for these deposit point variants.

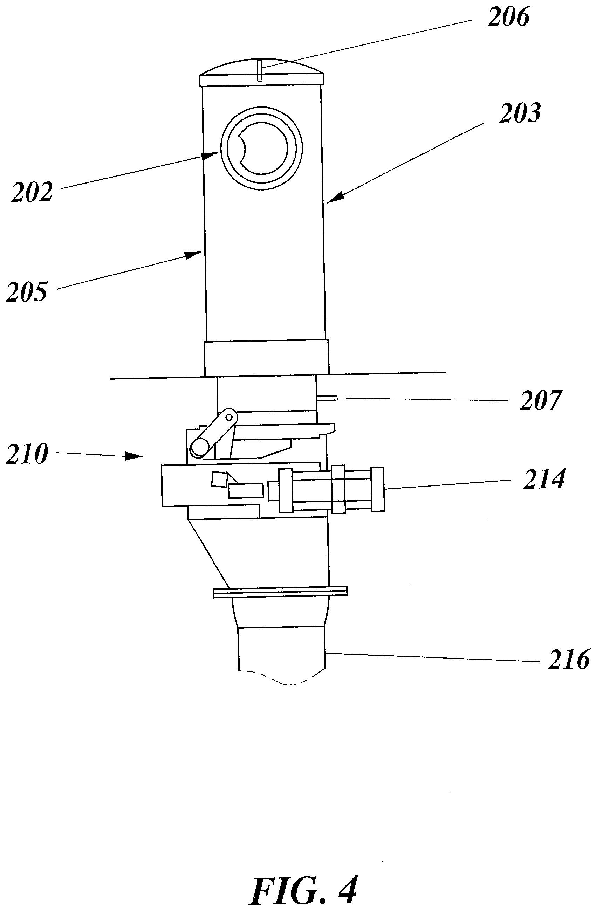

In Fig. 4 is illustrated a further variant of a deposit point according to Fig. 1 and formed by another type of "litter bin" type insert 203 with inlet opening 202. In this case the storage space 205 is formed by the actual "litter bin" and downstream communicates directly with a transport pipe TP connection pipe 216 through a discharge valve 210 with its actuator 214. The first and second, or upper and lower, sensors 206, 207 are like before provided at spaced locations, with the first sensor 206 again preferably provided at an upper portion of the insert 203 and with the lower sensor 207 positioned slightly above or upstream of the discharge valve 210. Like before, all other considerations regarding the sensors that have been discussed above are valid also for this deposit point variant.

The control assembly and the associated method of controlling a storage space emptying cycle will now be described with specific reference to Figs. 5 and 6. In particular, Fig. 5 illustrates an exemplifying control assembly for controlling the emptying cycle of a temporary storage space of a pneumatic material collection and transport system 1 where air flow transports material from the storage space and through a controllable discharge valve provided downstream of the actual storage space. The associated emptying cycle control method is illustrated in the flow diagram of Fig. 6 and to the applicable extent, said assembly and method will also be described with specific reference to the deposit point 2, 3 of Fig. 2, but it shall be clear that this description applies equally to all deposit point variants.

The control assembly basically includes the above mentioned single or multiple emptying state sensors 6, 7, a control system emptying logic CSEL and a valve actuator control means 19 for controlling discharge valve 10 opening and closing through its actuator 14. The sensor or sensors 6, 7 are provided in association with the storage space 5 for detecting, continuously or at least at very short intervals, an emptying state of the storage space 5 during a discharge valve open condition OC. Said valve open condition OC is reached by actuating the discharge valve actuator 14 when storage space emptying start conditions are met, e.g. in response to an output from an indicated fill state control 8, such as a conventional level sensor.

The output from the emptying state sensor/sensors 6, 7 is input to means 17 for logging and evaluating the emptying state sensor output signals SS1, SS2. The evaluation may preferably be related to e.g. a set empty state time EST during which the sensor/sensors shall not have registered any waste item existing in the storage space in order for a storage space empty condition EC to be indicated. This logged or monitored and evaluated output from said emptying state sensor/sensors is then input to means 18 for computing a controlled discharge valve open time COT, to effect closing of the discharge valve 10 by means of the discharge valve actuator control means 19 when the monitored and evaluated output from the sensor/sensors 6, 7 has indicated the empty condition EC of the storage space and when further timing and emptying criteria have been met.

Said further emptying criteria are set in a very schematically shown timer and/or counter or other input means 20. One example of such further emptying criteria is discharge valve timing conditions TC that may include a minimum discharge valve open time OT_{MIN} overriding the computed open time COT in dependence of the type of waste deposit point 2, 3 and/or of the type of controlled discharge valve 10 and/or of the type of sensor/sensors 6, 7 employed and/or of the type of material being collected. Another example may be the setting of a maximum discharge valve open time OT_{MAX} to exclude blocking the entire system emptying sequence in the event that a correct empty condition EC signal is not received. Other examples of such further criteria may be the addition of extra storage space clearing time ECT that may include extra discharge valve open time ECT1 for securing appropriate clearing of the storage space and calculated based on waste fraction and/or storage space diameter, to compensate for waste friction against walls of the storage space; or extra discharge valve open time ECT2 to compensate for accelerating and transporting material through a substantially horizontal section of a pipe bend storage space 105, 305 in the deposit point variants 103, 303 of Fig, 3.

Fig. 6 is a flow chart summarizing exemplary methods according to the invention, of controlling emptying cycles for temporary storage spaces. Such control methods will be initiated after storage space emptying start conditions have been met. Said emptying start conditions may be related to a predetermined system emptying sequence control in combination with the output from a fill state sensor. In a first step S1, after the emptying start conditions have been met, emptying of a storage space is initiated by opening the associated discharge valve and by applying vacuum to the storage space. In step S2 the emptying state of the storage space is detected and monitored by means of a logged signal SS1, SS2 from the single or multiple emptying state sensor or sensors. This sensor signal monitoring is performed during the entire time that the discharge valve is in its open condition OC. In fact, this monitoring may be activated prior to step 1 and is preferably performed continuously during said valve open condition OC.

In step S3 the detected sensor output SS1, SS2 is evaluated in the relevant means 17 and a discharge valve open time COT is computed and controlled by the relevant means 18, based on monitored and evaluated output from the emptying state sensor/sensors. As long as sensor input monitoring indicates that an empty state condition EC has not been met, the monitoring is continued in step S4. In the basic embodiment, the discharge valve is then closed in step S5 to terminate the emptying cycle when the monitored, evaluated and computed emptying state sensor signals SS1, SS2 indicate that the storage space empty condition EC has been met.

The computed valve open time COT may in specific cases be overridden in a further step S6, by the setting of the above mentioned extra storage space clearing time ECT that may include the extra discharge valve open time ECT1 for securing appropriate clearing of a temporary waste storage space of the type disclosed in e.g. Figs 2, and 4 where deposited material is stored on a gravity plate type of discharge valve. As was mentioned above this extra discharge valve open time ECT1 may be calculated based on e.g. type of waste fraction and/or storage space diameter. The extra storage space clearing time ECT may alternatively include the extra discharge valve open time ECT2 compensating for accelerating and transporting material through a horizontal storage space section of a temporary waste storage space of the type disclosed in Fig 3. In further modifications of the control method discharge valve timing conditions TC, such as the above mentioned discharge valve minimum open time OT_{MIN} and/or maximum open time OT_{MAX} overriding the computed open time COT, may alternatively or additionally be set in a further step S7.

In the inventive control method the storage space emptying state may be detected and monitored during discharge valve open condition OC by means of digital and/or analogue level sensors, and/or by means of mechanical and/or ultrasonic and/or infrared type sensors as first emptying state sensors and/or as second or further emptying state sensors. However any appropriate type of present or future sensor may be used within the scope of the invention.

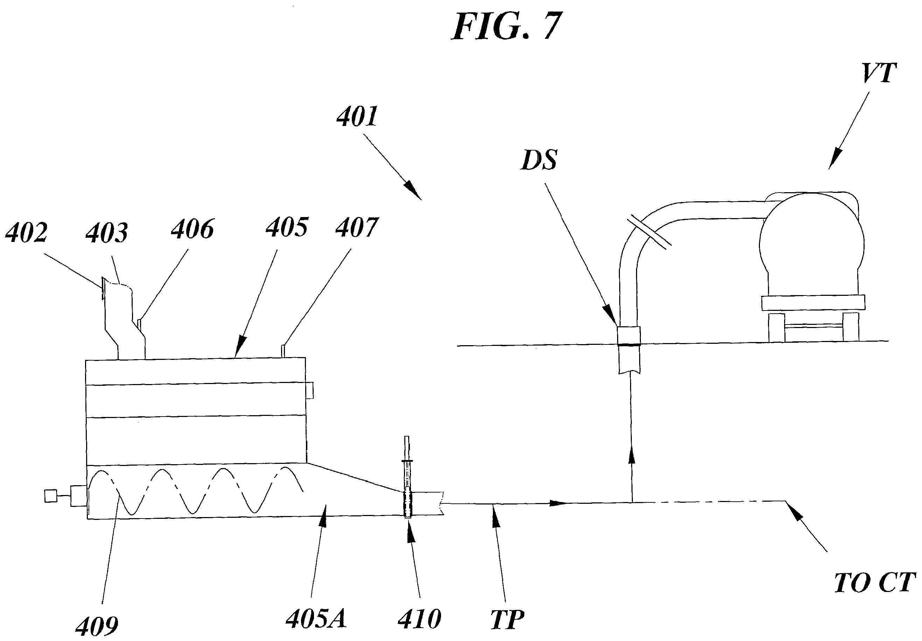

In Fig. 7 is disclosed an application of the inventive principles to a deposit point variant that includes a temporary waste storage space in the form of a waste storage tank 405 having an inlet chute 403 with associated inlet opening 402 and an optional bottom screw 409. Although this storage tank 405 is illustrated being part of a mobile type of vacuum operated waste collection system 401, it is indicated in the drawing that it may also be associated with the above discussed type of stationary type vacuum operated waste collection system having a central collection station CT. In the former case waste is temporarily stored in tank 405 and is intermittently discharged from the tank by being transported by partial vacuum in a transport pipe TP, from a tank discharge area 405A, through a discharge valve 410 and to a vacuum truck VT. A first or rear emptying state sensor 406 is provided in the upper tank area close to the inlet chute 403 and a second or front emptying state sensor 407 is provided in the upper tank area, close to the tank discharge area 405A. The above described inventive emptying cycle control applies generally also to this embodiment, but may here preferably be incorporated in e.g. a tank operation control system as disclosed in our earlier Swedish Patent No.529358C1. In a further modification the bottom screw 409 is operated for providing a volume optimization in the tank, as described in our International PCT Application No. WO2009038531A1. In such a case the described control methods, and especially the indication of the storage space empty condition EC, may preferably be related also to an input of a signal representing a number of forwardly directed bottom screw volume optimization operations.

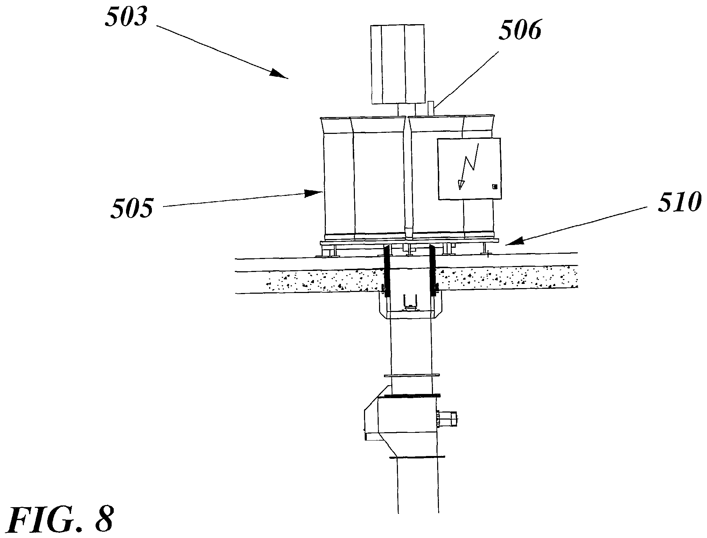

Finally, Fig. 8 exemplifies a further deposit point variant to which the invention may be applied. Here, waste material is deposited in a carousel type of inlet 503 comprising a storage space 505 consisting of separate compartments (not illustrated) that may be rotated to position an inlet opening (not shown) in line with a designated compartment for depositing waste therein. When the compartments are ready for emptying they are rotated for alignment with a discharge valve 510 and an emptying state sensor 506. Emptying of each compartment is then carried out and controlled in accordance with the general control cycle described above.

In alternative, but not specifically illustrated embodiments of the invention variations of the different illustrated features may be employed without departing from the scope of the invention as defined in the claims. One example thereof is the actual positioning of the emptying state sensor/sensors of the invention. Depending upon the type of temporary storage space in question, its shape, size and the deposit point associated therewith, the sensor/sensors may be optionally positioned inside, outside, above or below the storage space.

The invention has been described in connection with what is presently considered to be the most practical and preferred embodiments, but it is to be understood that the invention is not limited to the disclosed embodiments. The invention is therefore intended to cover various modifications within scope of the appended claims.

## Claims

1. A method of controlling the emptying cycle for a temporary storage space (5; 105; 205; 305; 405; 505) in association with a deposit point (2, 3; 102, 103; 202, 203; 302, 303; 402, 403; 503) of a pneumatic material collection and transport system (1; 401) using air flow to transport collected material from said storage space, whereby emptying is performed by opening a discharge valve (10; 110; 210; 310; 410; 510) provided downstream of the actual storage space, **characterized by:**
- detecting a storage space emptying state during discharge valve open condition (OC), wherein said storage space emptying state relates to an amount of collected material that remains in said storage space; by
- monitoring and logging the output (SS1, SS2) from at least one storage space emptying state sensor (6, 7; 106, 107; 206, 207; 306, 307; 406, 407; 506) configured for detecting said storage space emptying state during discharge valve open condition, provided in association with said temporary storage space (5; 105; 205; 305; 405; 505);
- evaluating the output (SS1, SS2) from the at least one emptying state sensor; and
- closing the discharge valve when the monitored and evaluated output from said emptying state sensor/sensors has indicated a storage space empty condition (EC).

2. A method according to claim 1, **characterized by** computing a controlled discharge valve open time (COT) based on the monitored and evaluated output from the emptying state sensor/sensors and additional predetermined discharge valve timing conditions (TC).

3. A method according to claim 2, **characterized by** setting a discharge valve (10; 110; 210; 310; 410; 510) minimum open time (OT_{MIN}) overriding the computed open time (COT) and being selected in dependence of the type of material deposit point (2, 3; 102, 103; 202, 203; 302, 303; 402, 403; 503 ) and/or of the controlled discharge valve and/or of the type of sensor/sensors (6, 7; 106, 107; 206, 207; 306, 307; 406, 407; 506) employed and/or of the type of material being collected.

4. A method according to claim 2 or 3, **characterized by** setting a discharge valve (10; 110; 210; 310; 410; 510) maximum open time (OT_{MAX}) overriding the computed open time (COT) in the event that a correct empty condition (EC) signal is not received.

5. A method according to any of claims 1-4, **characterized by** detecting and monitoring the storage space emptying state during discharge valve open condition (OC) by means of digital and/or analogue level sensors (6, 7; 106, 107; 206, 207; 306, 307; 406, 407; 506) and/or by means of mechanical and/or ultrasonic and/or infrared type sensors (6, 7; 106, 107; 206, 207; 306, 307; 406, 407; 506) as at least one emptying state sensor (6, 7; 106, 107; 206, 207; 306, 307; 406, 407; 506) of said at least one emptying state sensor (6, 7; 106, 107; 206, 207; 306, 307; 406, 407; 506).

6. A method according to any of claims 2-5 for controlling the emptying cycle for a temporary waste storage space (5; 205; 505) where deposited material is stored on a gravity plate type of discharge valve (10; 210; 510), **characterized by** overriding the computed valve open time (COT) by setting an extra storage space clearing time (ECT) that may include an added extra discharge valve open time (ECT1) calculated based on waste fraction and/or storage space diameter, to compensate for waste friction against walls of the storage space.

7. A method according to any of claims 2-5 for controlling the emptying cycle for a temporary storage space (105; 305) of a type where deposited material is stored in a pipe bend (105A; 305A) and the discharge valve (110; 310) is located in a substantially horizontal pipe section (116; 316), **characterized by** overriding the computed valve open time (COT) by setting an extra storage space clearing time (ECT) that may include an additional discharge valve open time (ECT2) to compensate for accelerating and transporting material through said substantially horizontal pipe section.

8. An emptying cycle control assembly for a temporary storage space (5; 105; 205; 305; 405; 505) of a pneumatic material collection and transport system (1; 401);
said control assembly including:
- a control system having an emptying logic (CSEL); and
- a valve actuator control means (19) for controlling discharge valve opening and closing of a discharge valve (10; 110; 210; 310; 410; 510) being provided downstream of the storage space, **characterized by:**
- at least one sensor (6, 7; 106, 107; 206, 207; 306, 307; 406, 407; 506) for detecting a storage space emptying state during discharge valve open condition (OC), provided in association with said temporary storage space, wherein said storage space emptying state relates to an amount of collected material that remains in said storage space;
- means (17) for evaluating the output (SS1-SS2) from emptying state sensor/sensors; and
- means (18) for computing a controlled valve open time (COT) based on monitored and evaluated output from said at least one emptying state sensor to effect closing of the discharge valve when the monitored and evaluated output from the emptying state sensor or sensors has indicated an empty condition (EC) of the storage space.

9. An assembly according to claim 8, **characterized by** means (20) for setting a discharge valve (10; 110; 210; 310; 410; 510) minimum open time (OT_{MIN}) overriding the computed open time (COT) in dependence of the type of waste deposit point (2, 3; 102, 103; 202, 203; 302, 303; 402, 403; 503) and/or of the controlled discharge valve and/or of the type of sensor/sensors (6, 7; 106, 107; 206, 207; 306, 307; 406, 407; 506) employed and/or of the type of material being collected.

10. An assembly according to claim 8 or 9, **characterized in that** the sensor/sensors (6, 7; 106, 107; 206, 207; 306, 307; 406, 407; 506) for detecting a storage space emptying state comprise a first emptying state sensor (6; 106; 206; 306; 406; 506) and in the relevant case further emptying state sensors (7; 107; 207; 307; 407) and that the sensor/sensors are digital and/or analogue level sensors (6; 106; 206; 306; 406; 506) and/or mechanical and/or ultrasonic and/or infrared type sensors.

## Patentansprüche

1. Verfahren zum Steuern des Entleerungszyklus für einen temporären Lagerraum (5; 105; 205; 305; 405; 505) in Verbindung mit einer Ablagestelle (2, 3; 102, 103; 202, 203; 302, 303; 402, 403; 503) eines pneumatischen Materialsammel- und Transportsystems (1; 401), das einen Luftstrom verwendet, um gesammeltes Material aus dem Lagerraum zu transportieren, wobei die Entleerung durch Öffnen eines Auslassventils (10; 110; 210; 310; 410; 510) durchgeführt wird, das stromabwärts des eigentlichen Lagerraums vorgesehen ist, **gekennzeichnet durch:**
- das Erfassen eines Lagerraum-Entleerungszustands während des Öffnungszustands (OC) des Auslassventils, wobei sich der Lagerraum-Entleerungszustand auf eine Menge an gesammeltem Material bezieht, die in dem Lagerraum verbleibt; durch
- das Überwachen und Aufzeichnen des Ausgangssignals (SS1, SS2) von mindestens einem Lagerraum-Entleerungszustandssensor (6, 7; 106, 107; 206, 207; 306, 307; 406, 407; 506), der zum Erfassen des Lagerraum-Entleerungszustands während des Öffnungszustands des Auslassventils konfiguriert ist und in Verbindung mit dem temporären Lagerraum (5; 105; 205; 305; 405; 505) vorgesehen ist;
- das Auswerten des Ausgangssignals (SS1, SS2) von dem mindestens einen Entleerungszustandssensor; und
- das Schließen des Auslassventils, wenn das überwachte und ausgewertete Ausgangssignal von dem/den Entleerungszustandssensor(en) einen Leerzustand (EC) des Lagerraums angezeigt hat.

2. Verfahren nach Anspruch 1, **gekennzeichnet durch** das Berechnen einer gesteuerten Auslassventil-Öffnungszeit (COT) auf der Grundlage des überwachten und ausgewerteten Ausgangssignals des/der Entleerungszustandssensors/Sensoren und zusätzlicher vorbestimmter Auslassventil-Zeitsteuerungsbedingungen (TC).

3. Verfahren nach Anspruch 2, **gekennzeichnet durch** das Einstellen einer minimalen Öffnungszeit (OT_{MIN}) des Auslassventils (10; 110; 210; 310; 410; 510), die die berechnete Öffnungszeit (COT) überschreibt und in Abhängigkeit von der Art der Materialablagestelle (2, 3; 102, 103; 202, 203; 302, 303; 402, 403; 503) und/oder des gesteuerten Auslassventils und/oder der Art des/der verwendeten Sensors/Sensoren (6, 7; 106, 107; 206, 207; 306, 307; 406, 407; 506) und/oder der Art des gesammelten Materials gewählt wird.

4. Verfahren nach Anspruch 2 oder 3, **gekennzeichnet durch** das Einstellen einer maximalen Öffnungszeit (OT_{MAX}) eines Auslassventils (10; 110; 210; 310; 410; 510), die die berechnete Öffnungszeit (COT) überschreibt, wenn kein korrektes Leerzustandssignal (EC) empfangen wird.

5. Verfahren nach einem der Ansprüche 1-4, **gekennzeichnet durch** das Erfassen und Überwachen des Entleerungszustandes des Lagerraumes während des Öffnungszustands (OC) des Auslassventils mittels digitaler und/oder analoger Füllstandssensoren (6, 7; 106, 107; 206, 207; 306, 307; 406, 407; 506) und/oder mittels mechanischer und/oder Ultraschall- und/oder Infrarot-Sensoren (6, 7; 106, 107; 206, 207; 306, 307; 406, 407; 506) als mindestens ein Entleerungszustandssensor (6, 7; 106, 107; 206, 207; 306, 307; 406, 407; 506) des mindestens einen Entleerungszustandssensors (6, 7; 106, 107; 206, 207; 306, 307; 406, 407; 506).

6. Verfahren nach einem der Ansprüche 2-5 zum Steuern des Entleerungszyklus für einen temporären Abfalllagerraum (5; 205; 505), in dem abgelagertes Material auf einem Auslassventil (10; 210; 510) vom Schwerkraftscheibentyp gelagert wird, **gekennzeichnet durch** das Überschreiben der berechneten Ventilöffnungszeit (COT) durch Einstellen einer zusätzlichen Lagerraum-Räumzeit (ECT), die eine zusätzliche Extra-Auslassventil-Öffnungszeit (ECT1) enthalten kann, die auf der Grundlage des Abfallanteils und/oder des Lagerraumdurchmessers berechnet wird, um die Abfallreibung an den Wänden des Lagerraums auszugleichen.

7. Verfahren nach einem der Ansprüche 2-5 zum Steuern des Entleerungszyklus für einen temporären Lagerraum (105; 305) einer Art, bei der abgelagertes Material in einem Rohrbogen (105A; 305A) gelagert wird und das Auslassventil (110; 310) in einem im Wesentlichen horizontalen Rohrabschnitt (116; 316) angeordnet ist, **gekennzeichnet durch** das Überschreiben der berechneten Ventilöffnungszeit (COT), indem eine zusätzliche Lagerraum-Räumzeit (ECT) eingestellt wird, die eine zusätzliche Auslassventil-Öffnungszeit (ECT2) enthalten kann, um die Beschleunigung und den Transport von Material durch den im Wesentlichen horizontalen Rohrabschnitt auszugleichen.

8. Steuereinheit für den Entleerungszyklus eines temporären Lagerraums (5; 105; 205; 305; 405; 505) eines pneumatischen Materialsammel- und Transportsystems (1; 401);
wobei die Steuereinheit Folgendes umfasst:
- ein Steuersystem mit einer Entleerungslogik (CSEL); und
- eine Ventilstellglied-Steuereinrichtung (19) zum Steuern des Auslassventil-Öffnens und -Schließens eines Auslassventils (10; 110; 210; 310; 410; 510), das stromabwärts des Lagerraums vorgesehen ist, **gekennzeichnet durch:**
- mindestens einen Sensor (6, 7; 106, 107; 206, 207; 306, 307; 406, 407; 506) zum Erfassen eines Lagerraum-Entleerungszustands während des Öffnungszustands (OC) des Auslassventils, der in Verbindung mit dem temporären Lagerraum vorgesehen ist, wobei der Lagerraum-Entleerungszustand sich auf eine Menge an gesammeltem Material bezieht, die in dem Lagerraum verbleibt;
- eine Einrichtung (17) zum Auswerten des Ausgangssignals (SS1-SS2) des/der Entleerungszustandssensors/Sensoren; und
- eine Einrichtung (18) zum Berechnen einer gesteuerten Ventilöffnungszeit (COT) auf der Grundlage des überwachten und ausgewerteten Ausgangssignals des mindestens einen Entleerungszustandssensors, um das Schließen des Auslassventils zu bewirken, wenn das überwachte und ausgewertete Ausgangssignal des/der Entleerungszustandssensors/Entleerungszustandssensoren einen Leerzustand (EC) des Lagerraums angezeigt hat.

9. Einheit nach Anspruch 8, **gekennzeichnet durch** eine Einrichtung (20) zum Einstellen einer minimalen Öffnungszeit (OT_{MIN}) eines Auslassventils (10; 110; 210; 310; 410; 510), die die berechnete Öffnungszeit (COT) in Abhängigkeit von der Art der Abfallablagestelle (2, 3; 102, 103; 202, 203; 302, 303; 402, 403; 503) und/oder des gesteuerten Auslassventils und/oder der Art des/der verwendeten Sensors/Sensoren (6, 7; 106, 107; 206, 207; 306, 307; 406, 407; 506) und/oder der Art des gesammelten Materials überschreibt.

10. Einheit nach Anspruch 8 oder 9, **dadurch gekennzeichnet, dass** der/die Sensor(en) (6, 7; 106, 107; 206, 207; 306, 307; 406, 407; 506) zur Erfassung eines Lagerraum-Entleerungszustandes einen ersten Entleerungszustandssensor (6; 106; 206; 306; 406; 506) und gegebenenfalls weitere Entleerungszustandssensoren (7; 107; 207; 307; 407) umfassen und dass der/die Sensor/en digitale und/oder analoge Füllstandsensoren (6; 106; 206; 306; 406; 506) und/oder mechanische und/oder Ultraschall- und/oder Infrarotsensoren sind.

## Revendications

1. Procédé de commande du cycle de vidange d'un espace de stockage temporaire (5 ; 105 ; 205 ; 305 ; 405 ; 505) en association avec un point de dépôt (2, 3 ; 102, 103 ; 202, 203 ; 302, 303 ; 402, 403 ; 503) d'un système pneumatique de collecte et de transport de matériaux (1 ; 401) au moyen d'un flux d'air pour transporter les matériaux collectés depuis ledit espace de stockage, selon lequel la vidange est effectuée par l'ouverture d'une vanne de décharge (10 ; 110 ; 210 ; 310 ; 410 ; 510) prévue en aval de l'espace de stockage proprement dit, **caractérisé en ce que** :
- la détection d'un état de vidange de l'espace de stockage pendant la condition d'ouverture de la vanne de décharge (OC), dans lequel ledit état de vidange de l'espace de stockage se rapporte à une quantité de matériau collecté qui reste dans ledit espace de stockage ; en
- la surveillance et l'enregistrement de la sortie (SS1, SS2) à partir d'au moins un capteur d'état de vidange de l'espace de stockage (6, 7 ; 106, 107 ; 206, 207, 306, 307 ; 406, 407, 506) configuré pour détecter l'état de vidange de l'espace de stockage pendant la condition d'ouverture de la vanne de décharge, état fourni en association avec ledit espace de stockage temporaire (5 ; 105 ; 205 ; 305 ; 405 ; 505) ;
- l'évaluation de la sortie (SS1, SS2) de l'au moins un capteur d'état de vidange ; et
- la fermeture de la vanne de décharge lorsque la sortie surveillée et évaluée de ce ou ces capteurs d'état de vidange a indiqué un état de vide de l'espace de stockage (EC).

2. Procédé selon la revendication 1, caractérisé en calculant un temps d'ouverture contrôlé de la vanne de décharge (COT) sur la base de la sortie surveillée et évaluée du ou des capteurs d'état de vidange et des conditions de synchronisation prédéterminées supplémentaires de la vanne de décharge (TC).

3. Procédé selon la revendication 2, caractérisé en définissant un temps d'ouverture minimum (OT_{MIN}) de la vanne de décharge (10 ; 110 ; 210 ; 310 ; 410 ; 510) prévalant sur le temps d'ouverture calculé (COT) et étant sélectionné en fonction du type de point de dépôt de matériau (2, 3 ; 102, 103 ; 202, 203 ; 302, 303 ; 402, 403 ; 503 ) et/ou de la vanne de décharge contrôlée et/ou du type de capteur(s) (6, 7 ; 106, 107 ; 206, 207 ; 306, 307 ; 406, 407 ; 506) utilisé(s) et/ou du type de matériau collecté.

4. Procédé selon la revendication 2 ou la revendication 3, **caractérisé en ce que** le temps d'ouverture maximal (OT_{MAX}) de la vanne de décharge (10 ; 110 ; 210 ; 310 ; 410 ; 510) est supérieur au temps d'ouverture calculé (COT) dans le cas où un signal de condition de vidange (EC) correct n'est pas reçu.

5. Procédé selon l'une quelconque des revendications 1 à 4, **caractérisé en ce qu'**il détecte et surveille l'état de vidange de l'espace de stockage pendant la condition d'ouverture de la vanne de décharge (OC) au moyen de capteurs de niveau numériques et/ou analogiques (6, 7 ; 106, 107 ; 206, 207 ; 306, 307 ; 406, 407 ; 506) et/ou au moyen de capteurs de type mécanique et/ou ultrasonique et/ou infrarouge (6, 7 ; 106, 107 ; 206, 207 ; 306, 307 ; 406, 407 ; 506) en tant qu'au moins un capteur d'état de vidange (6, 7 ; 106, 107 ; 206, 207 ; 306, 307 ; 406, 407 ; 506) dudit au moins un capteur d'état de vidange (6, 7 ; 106, 107 ; 206, 207 ; 306, 307 ; 406, 407 ; 506).

6. Procédé selon l'une quelconque des revendications 2 à 5 permettant de commander le cycle de vidange d'un espace de stockage temporaire de déchets (5 ; 205 ; 505) où les matières déposées sont stockées sur une vanne de décharge de type plaque à gravité (10 ; 210 ; 510), **caractérisé en ce que** l'on supplante le temps d'ouverture de la vanne calculé (COT) en définissant un temps de vidange supplémentaire de l'espace de stockage (ECT) qui peut inclure un temps d'ouverture supplémentaire de la vanne de décharge (ECT1) calculé en fonction de la fraction de déchets et/ou du diamètre de l'espace de stockage, afin de compenser le frottement des déchets contre les parois de l'espace de stockage.

7. Procédé selon l'une quelconque des revendications 2 à 5 permettant de commander le cycle de vidange d'un espace de stockage temporaire (105 ; 305) d'un type où les matières déposées sont stockées dans un coude de tuyau (105A ; 305A) et où la vanne de décharge (110 ; 310) est située dans une section de tuyau sensiblement horizontale (116 ; 316), **caractérisé en ce qu'**il supplante le temps d'ouverture de la vanne calculé (COT) en définissant un temps de vidange supplémentaire de l'espace de stockage (ECT) pouvant inclure un temps d'ouverture supplémentaire de la vanne de décharge (ECT2) afin de compenser l'accélération et le transport des matières à travers ladite section de tuyau sensiblement horizontale.

8. Ensemble de commande du cycle de vidange destiné à un espace de stockage temporaire (5; 105; 205; 305; 405; 505) d'un système pneumatique de collecte et de transport de matériaux (1 ; 401) ; ledit ensemble de commande comprenant :
- un système de commande doté d'une logique de vidange (CSEL) ; et
- un moyen de commande d'actionneur de vanne (19) permettant de commander l'ouverture et la fermeture d'une vanne de vidange (10 ; 110 ; 210 ; 310 ; 410 ; 510) étant prévue en aval de l'espace de stockage, **caractérisé en ce que** :
- au moins un capteur (6, 7 ; 106, 107 ; 206, 207 ; 306, 307 ; 406, 407 ; 506) permettant de détecter un état de vidange de l'espace de stockage pendant l'état d'ouverture de la vanne de décharge (OC), prévu en association avec ledit espace de stockage temporaire, dans lequel ledit état de vidange de l'espace de stockage se rapporte à une quantité de matériau collecté qui reste dans ledit espace de stockage ;
- des moyens (17) permettant d'évaluer la sortie (SS1-SS2) du ou des capteurs d'état de vidange ; et
- des moyens (18) permettant de calculer un temps d'ouverture contrôlé de la vanne (COT) sur la base de la sortie surveillée et évaluée dudit au moins un capteur d'état de vidange afin de fermer la vanne de décharge lorsque la sortie surveillée et évaluée du ou des capteurs d'état de vidange a indiqué un état de vidange (EC) de l'espace de stockage.

9. Ensemble selon la revendication 8, **caractérisé en ce que** les moyens (20) permettant de régler un temps d'ouverture minimum (OT_{MIN}) de la vanne de décharge (10 ; 110 ; 210 ; 310 ; 410 ; 510) prévalent sur le temps d'ouverture calculé (COT) en fonction du type de point de dépôt de déchets (2, 3 ; 102, 103 ; 202, 203 ; 302, 303 ; 402, 403 ; 503) et/ou de la vanne de décharge contrôlée et/ou du type de capteur(s) (6, 7 ; 106, 107 ; 206, 207 ; 306, 307 ; 406, 407 ; 506) utilisé(s) et/ou du type de matériau collecté.

10. Ensemble selon la revendication 8 ou la revendication 9, **caractérisé en ce que** le ou les capteurs (6, 7 ; 106, 107 ; 206, 207 ; 306, 307 ; 406, 407 ; 506) de détection d'un état de vidange de l'espace de stockage comprennent un premier capteur d'état de vidange (6 ; 106 ; 206 ; 306 ; 406 ; 506) et, le cas échéant, d'autres capteurs d'état de vidange (7 ; 107 ; 207 ; 307 ; 407) et que le ou les capteurs sont des capteurs de niveau numériques et/ou analogiques (6 ; 106 ; 206 ; 306 ; 406 ; 506) et/ou des capteurs de type mécanique et/ou ultrasonique et/ou infrarouge.
